# EUROPÄISCHE PATENTSCHRIFT

(11) **EP 3 162 667 B1**
(45) Veröffentlichungstag und Bekanntmachung des Hinweises auf die Patenterteilung: **10.04.2019**
(21) Anmeldenummer: 16192754.6
(22) Anmeldetag: 07.10.2016
(51) Int. Cl.: B62D 15/02

(54) **VERFAHREN ZUM ZUMINDEST SEMI-AUTONOMEN MANÖVRIEREN EINES KRAFTFAHRZEUGS IN EINE PARKLÜCKE MIT BORDSTEIN, FAHRERASSISTENZSYSTEM SOWIE KRAFTFAHRZEUG**
METHOD FOR AT LEAST SEMI-AUTONOMOUS MANEUVERING OF A MOTOR VEHICLE INTO A PARKING SPACE WITH KERB, DRIVER ASSISTANCE SYSTEM AND MOTOR VEHICLE
PROCÉDÉ DE MANEUVRE AU MOINS SEMI-AUTONOME DE MISE EN STATIONNEMENT D'UN VÉHICULE AUTOMOBILE DANS UNE AIRE DE STATIONNEMENT DE TYPE CRÉNEAU AVEC BORDURE DE TROTTOIR, SYSTÈME D'ASSISTANCE AU CONDUCTEUR ET VÉHICULE AUTOMOBILE

(30) Priorität: 29.10.2015 DE 102015118468
(43) Veröffentlichungstag der Anmeldung: 03.05.2017
(73) Patentinhaber: Valeo Schalter und Sensoren GmbH, 74321 Bietigheim-Bissingen (DE)
(72) Erfinder: Jecker, Nicolas, 74321 Bietigheim-Bissingen (DE); Grimm, Oliver, 74321 Bietigheim-Bissingen (DE)

(56) Entgegenhaltungen:
- DE-A1-102010 063 840
- DE-A1-102011 086 245
- DE-A1-102013 220 931

## Beschreibung

Die vorliegende Erfindung betrifft ein Verfahren zum zumindest semi-autonomen Manövrieren eines Kraftfahrzeugs, bei welchem eine Parklücke in einem Umgebungsbereich des Kraftfahrzeugs erkannt wird, wobei die Parklücke von einem Bordstein begrenzt ist oder ein Bordstein innerhalb der Parklücke angeordnet ist, eine Fahrtrajektorie zum Einparken des Kraftfahrzeugs in die Parklücke bestimmt wird und das Kraftfahrzeug entlang der bestimmten Fahrtrajektorie manövriert wird. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend insbesondere auf Fahrerassistenzsysteme, welche den Fahrer beim Manövrieren des Kraftfahrzeugs und insbesondere beim Einparken des Kraftfahrzeugs in eine Parklücke unterstützen. Aus dem Stand der Technik sind bereits Fahrerassistenzsysteme bekannt, welche mit Hilfe von entsprechenden Sensoren Parklücken beziehungsweise freie Stellplätze erkennen können und den Fahrer beim Einparkvorgang unterstützen. Hierbei kann der Fahrer sowohl beim Längsparken als auch beim Querparken unterstützt werden. Darüber hinaus sind Fahrerassistenzsysteme bekannt, die das Kraftfahrzeug bei einem Einparkvorgang semi-autonom manövrieren. Hierbei übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes beziehungsweise vollautonomes Manövrieren des Kraftfahrzeugs ermöglichen.

Des Weiteren sind aus dem Stand der Technik Fahrerassistenzsysteme bekannt, die den Fahrer bei Einparkmanövern unterstützen, bei denen das Kraftfahrzeug zumindest bereichsweise über einen Bordstein fährt. Dies ist beispielsweise gegeben, wenn das Kraftfahrzeug beim Einparken derart bewegt wird, dass zumindest eine Rad des Kraftfahrzeugs über einen Bordstein bewegt wird. Hierbei ist es zudem von Interesse, einen Kontakt des zumindest einen Rades mit dem Bordstein zu erkennen. Zu diesem Zweck kann beispielsweise das mit einem Antriebsmotor bereitgestellte Drehmoment erfasst werden. Anhand einer Veränderung des Drehmoments kann der Kontakt des zumindest einen Rades mit dem Bordstein erkannt werden.

Hierzu beschreibt die DE 10 2009 003 216 A1 ein Fahrerassistenzverfahren, gemäß dem ein Höhenprofil einer Fahrbahnoberfläche entlang einer Radtrajektorie erfasst wird, welches mit einem vorbestimmten Höhenprofil verglichen wird und bei Vorhandensein dieser Merkmale eine vorbestimmte Aktion ausgelöst wird. Wenn sich beispielsweise auf einer vorberechneten Einparktrajektorie ein Bordstein befindet, so kann die Querführung des Kraftfahrzeugs derart verändert werden, dass der Bordstein in einem besonders günstigen Winkel überfahren wird. Ein günstiger Winkel verhindert eine Beschädigung eines Rades, insbesondere einer Felge.

DE 10 2010 063 840 A1 ist als nächstliegender Stand der Technik nach dem Oberbegriff des Anspruchs 1 zu sehen und betrifft ein Verfahren zum Einparken oder Manövrieren bei niedriger Geschwindigkeit eines Kraftfahrzeugs. Mindestens ein Umfeldobjekt des Kraftfahrzeugs wird erfasst und zur Berechnung einer Soll-Trajektorie des Kraftfahrzeugs herangezogen. Das Kraftfahrzeug wird entsprechend der Soll-Trajektorie automatisch gelenkt oder dem Fahrer des Kraftfahrzeugs werden entsprechende Lenkhinweise gegeben. Bei Unterschreitung eines Mindestabstandes des Kraftfahrzeugs zu dem mindestens ein detektierten Umfeldobjekt wird der Einscherradius des Kraftfahrzeugs in Abhängigkeit von dem Abstand zwischen dem Kraftfahrzeug und dem mindestens einen Umfeldobjekt nachgeführt, bis der Abstand den Mindestabstand wieder überschreitet.

Es ist Aufgabe der vorliegenden Erfindung, eine Lösung aufzuzeigen, wie ein Kraftfahrzeug beim Einparken in eine Parklücke mit Bordstein zuverlässiger manövriert werden kann.

Diese Aufgabe wird erfindungsgemäß durch ein Verfahren, durch ein Fahrerassistenzsystem sowie durch ein Kraftfahrzeug mit den Merkmalen gemäß der jeweiligen unabhängigen Ansprüchen gelöst. Vorteilhafte Ausführungen der Erfindung sind Gegenstand der abhängigen Ansprüche, der Beschreibung und der Figuren.

Ein erfindungsgemäßes Verfahren dient zum zumindest semi-autonomen Manövrieren eines Kraftfahrzeugs. Hierbei wird eine Parklücke in einem Umgebungsbereich des Kraftfahrzeugs erkannt, wobei die Parklücke von einem Bordstein begrenzt ist oder ein Bordstein innerhalb der Parklücke angeordnet ist. Zudem wird eine Fahrtrajektorie zum Einparken des Kraftfahrzeugs in die Parklücke bestimmt und das Kraftfahrzeug entlang der bestimmten Fahrtrajektorie manövriert. Darüber hinaus wird die Fahrtrajektorie derart bestimmt, dass diese zumindest zwei Parkzüge aufweist, zwischen welchen eine Fahrtrichtung des Kraftfahrzeugs an einem Wechselpunkt geändert wird. Ferner wird die Fahrtrajektorie derart bestimmt, dass ein Abstand zwischen zumindest einem Rad des Kraftfahrzeugs und dem Bordstein an dem Wechselpunkt einen vorbestimmten Mindestabstand überschreitet. Dabei werden die zumindest zwei Parkzüge derart bestimmt, dass eine Anzahl von Bordsteinüberfahrten, bei denen zumindest ein Rad des Kraftfahrzeugs über dem Bordstein bewegt wird, minimiert wird

Mithilfe des Verfahrens soll das Kraftfahrzeug zumindest semi-autonom manövriert werden und hierdurch der Fahrer beim Einparken des Kraftfahrzeugs in die Parklücke unterstützt werden. Hierzu kann die Parklücke zunächst anhand von Sensordaten eines oder mehrerer Sensoren des Kraftfahrzeugs, die insbesondere als Ultraschallsensoren ausgebildet sind, erkannt werden. Zu diesem Zweck kann das Kraftfahrzeug beispielsweise an der Parklücke vorbei bewegt werden und hierbei der Umgebungsbereich des Kraftfahrzeugs mit den Sensoren kontinuierlich erfasst werden. Mit den Sensoren kann insbesondere ein Abstand zwischen dem Kraftfahrzeug und Objekten, welche die Parklücke begrenzen, bestimmt werden. Zudem kann es vorgesehen sein, dass eine aktuelle Position des Kraftfahrzeugs in Bezug auf die erkannte Parklücke bestimmt wird. Damit kann auch eine relative Lage des Kraftfahrzeugs beziehungsweise eines vorbestimmten Bezugspunkts des Kraftfahrzeugs relativ zu der erkannten Parklücke bestimmt werden. Auf Grundlage dieser Information kann eine Fahrtrajektorie bestimmt werden, entlang welcher das Kraftfahrzeug zum Einparken in die Parklücke bewegt wird. Das Kraftfahrzeug kann dann ausgehend von einer Startposition entlang der Fahrtrajektorie in die Parklücke bewegt werden. Hierbei kann das Kraftfahrzeug semi-autonom bewegt werden. In diesem Fall übernimmt beispielsweise ein Fahrerassistenzsystem des Kraftfahrzeugs einen Eingriff in die Lenkung, um das Kraftfahrzeug entlang der Fahrtrajektorie zu bewegen. Der Fahrer des Kraftfahrzeugs betätigt weiterhin das Gaspedal und die Bremse. Es kann auch vorgesehen sein, dass das Kraftfahrzeug autonom beziehungsweise vollautonom entlang der Fahrtrajektorie bewegt wird. In diesem Fall übernimmt das Fahrerassistenzsystem zudem einen Eingriff in einen Antriebsmotor und/oder eine Bremse des Kraftfahrzeugs.

Während der Fahrt des Kraftfahrzeugs entlang der geplanten Fahrtrajektorie kann fortlaufend ein Positionswert bestimmt. Dieser Positionswert beschreibt die aktuelle Position des Kraftfahrzeugs und somit auch die relative Lage des Kraftfahrzeugs zu der erkannten Parklücke. Der Positionswert wird auf Grundlage von Odometriedaten beziehungsweise mittels Odometrie bestimmt. Hierzu kann die Umdrehungszahl zumindest eines Rades des Kraftfahrzeugs erfasst werden, um die Bewegung des Kraftfahrzeugs zu bestimmen. Ferner können die Daten eines Lenkwinkelsensors und/oder eines Drehratensensors herangezogen werden, um die Fahrtrichtung des Kraftfahrzeugs zu bestimmen. Vorliegend gilt das Interesse insbesondere Parklücken, bei denen das Kraftfahrzeug zumindest teilweise über einen Bordstein bewegt wird. In diesem Fall rollt zumindest ein Rad des Kraftfahrzeugs über den Bordstein. Dieser Bordstein dient beispielsweise zur Abgrenzung verschiedener Bereiche der Straße voneinander. Beispielsweise kann eine Fahrbahn von einem anderen Bereich der Straße durch den Bordstein abgegrenzt sein, auf dem das Kraftfahrzeug zumindest teilweise geparkt werden soll. In diesem Fall befindet sich die Parklücke zumindest bereichsweise auf dem von der Fahrbahn durch den Bordstein abgegrenzten Bereich. Dieser Bereich, der durch den Bordstein abgegrenzt ist, kann insbesondere erhöht zu der Fahrbahn angeordnet sein. Des Weiteren liegt ein derartiger Einparkvorgang beispielsweise dann vor, wenn zumindest ein Rad beim Einparken in die Parklücke über den Bordstein beziehungsweise auf den Bordstein hinauf und wieder herab bewegt wird. Dieser Fall liegt beispielsweise dann vor, wenn der Bordstein die Parklücke begrenzt und die Fahrtrajektorie derart gewählt wird, dass zumindest ein Rad des Kraftfahrzeugs beim Einparkvorgang über den Bordstein bewegt wird.

Erfindungsgemäß ist es nun vorgesehen, dass die Fahrtrajektorie derart bestimmt wird, dass diese zumindest zwei Parkzüge aufweist. Zwischen den jeweiligen Parkzügen wird die Fahrtrichtung des Kraftfahrzeugs an einem Wechselpunkt geändert. Beispielsweise kann das Kraftfahrzeug zunächst entlang eines ersten Parkzugs rückwärts bewegt werden und anschließend entlang eines zweiten Parkzugs vorwärts bewegt werden. Zwischen den zumindest zwei Parkzügen befindet sich das Kraftfahrzeug an dem Wechselpunkt. Die Fahrtrajektorie wird nun derart bestimmt, dass zumindest ein Rad des Kraftfahrzeugs einen Mindestabstand zu dem Bordstein überschreitet, wenn sich das Kraftfahrzeug an dem Wechselpunkt befindet. Insbesondere kann der Mindestabstand zu einer Bordsteinkante des Bordsteins bestimmt werden. Im Vergleich zu Verfahren gemäß dem Stand der Technik, bei denen der Bordstein, wenn überhaupt, nur für die finale Einparkposition berücksichtigt wird, ist es vorliegend vorgesehen, dass der Bordstein auch während der einzelnen Parkzüge berücksichtigt wird. Insbesondere wird der Bordstein bei dem Bestimmen des Wechselpunktes zwischen den zumindest zwei Parkzügen berücksichtigt. Damit kann erreicht werden, dass der Wechsel zwischen den aufeinanderfolgenden Parkzügen zuverlässig erfolgen kann. Insbesondere kann erreicht werden, dass der Einparkvorgang zuverlässig erfolgen kann, ohne dass die Bewegung des Kraftfahrzeugs durch den Bordstein beeinflusst wird.

Die zumindest zwei Parkzüge werden derart bestimmt, dass eine Anzahl von Bordsteinüberfahrten, bei denen zumindest ein Rad des Kraftfahrzeugs über dem Bordstein bewegt wird, minimiert wird. Die Fahrtrajektorie beziehungsweise die einzelnen Parkzüge können dabei derart bestimmt werden, dass das Kraftfahrzeug möglichst wenig über den Bordstein bewegt wird. Das Bewegen über dem Bordstein kann dabei beinhalten, dass zumindest ein Rad des Kraftfahrzeugs auf dem Bordstein hinauf rollt. Ebenso kann das Bewegen über den Bordstein umfassen, dass zumindest ein Rad des Kraftfahrzeugs den Bordstein hinab rollt. Derartige Bordsteinüberfahrten können zu einer Beschädigung des Rades und insbesondere der Felge führen. Dabei können die einzelnen Parkzüge derart bestimmt werden, dass Bordsteinüberfahrten vermieden werden. Wenn zumindest ein Rad des Kraftfahrzeugs bei der Bordsteinüberfahrt über den Bordstein bewegt wird, kann der jeweilige Einparkzug auch derart bestimmt werden, dass das Rad unter einem vorbestimmten Winkel über den Bordstein bewegt wird. Somit können Beschädigungen des Rades und insbesondere der Felge verhindert werden.

In einer Ausführungsform wird das Kraftfahrzeug bei einem der Parkzüge in Richtung des Bordsteins bewegt und dieser Parkzug wird derart bestimmt, dass der Abstand zwischen dem zumindest einen Rad und dem Bordstein an dem Wechselpunkt vor einem Erreichen des Bordsteines den Mindestabstand überschreitet. Wenn das Kraftfahrzeug in Richtung des Bordsteins bewegt wird, kann dieser Parkzug derart bestimmt sein, dass der Wechselpunkt noch vor dem Bordstein liegt. Der Wechselpunkt ist also derart bestimmt, dass das zumindest eine Rad des Kraftfahrzeugs den vorbestimmten Mindestabstand zu dem Bordstein aufweist. Somit kann beispielsweise erreicht werden, dass das Kraftfahrzeug bei diesem Einparkzug nicht unnötig auf den Bordstein hinauf oder diesen hinab bewegt wird. Zudem kann durch den Mindestabstand des zumindest einen Rades erreicht werden, dass der nötige Abstand bereitgestellt wird, um das Kraftfahrzeug bei dem nachfolgenden Parkzug umzulenken. Insbesondere wird es ermöglicht, dass die lenkbaren Räder bewegt werden können. Somit kann beispielsweise verhindert werden, dass das Einparkmanöver abgebrochen wird, da das Kraftfahrzeug nicht oder nicht ausreichend gelenkt werden kann. Der vorliegende Aspekt betrifft zudem den Fall, bei dem das Kraftfahrzeug oder einzelne Räder des Kraftfahrzeugs schon über den Bordstein bewegt wurden. Hierbei kann die Fahrtrajektorie so gewählt werden, dass diese Räder nicht nochmals den Bordstein hinunter bewegt werden, sondern lediglich bis zu dem Mindestabstand zu dem Bordstein bewegt werden. Somit kann auch hier eine unnötige Bordsteinüberfahrt vermieden werden.

In einer weiteren Ausgestaltung wird das Kraftfahrzeug bei einem der Parkzüge zumindest bereichsweise über den Bordstein bewegt und dieser Parkzug wird derart bestimmt, dass der Abstand zwischen dem zumindest einen Rad und dem Bordstein an dem Wechselpunkt nach dem Bewegen des Kraftfahrzeugs über den Bordstein den Mindestabstand überschreitet. Vorliegend kann das Kraftfahrzeug bei dem Einparkzug auf den Bordstein hinauf bewegt werden. Es kann auch vorgesehen sein, dass sich zumindest einzelne Räder des Kraftfahrzeugs bereits auf dem Bordstein befinden und diese den Bordstein hinab bewegt werden. Dabei wird der Einparkzug beziehungsweise der Wechselpunkt derart bestimmt, dass das Kraftfahrzeug nach dem Überqueren des Bordsteins einen vorbestimmten Mindestabstand zu diesem aufweist. Somit kann für den nachfolgenden Parkzug gewährleistet werden, dass das Kraftfahrzeug entsprechend gelenkt werden kann, da die Bewegung des Kraftfahrzeugs und insbesondere der Räder nicht durch den Bordstein begrenzt ist.

Weiterhin ist es vorteilhaft, wenn der Mindestabstand in Abhängigkeit von einem Typ der erkannten Parklücke und/oder in Abhängigkeit davon bestimmt wird, ob das zumindest eine Rad ein lenkbares Rad ist. Das Verfahren kann grundsätzlich für unterschiedliche Typen von Parklücken verwendet werden. Die Parklücke kann beispielsweise zum Längsparken, zum Querparken oder zum Schrägparken des Kraftfahrzeugs ausgebildet sein. Dabei kann der Mindestabstand, in dem das zumindest eine Rad an dem Wendepunkt mindestens zu dem Bordstein beabstandet ist, in Abhängigkeit von dem Typ der Parklücke bestimmt werden. Bei einer Parklücke, die zum Querparken ausgebildet ist, werden die Räder im Wesentlichen senkrecht über dem Bordstein bewegt. Im Vergleich hierzu werden bei einer Parklücke zum Längsparken die Räder unter einem vorbestimmten Winkel über den Bordstein bewegt. Weiterhin kann überprüft werden, ob das zumindest eine Rad, das den Mindestabstand zu dem Bordstein aufweisen soll, lenkbar ist oder nicht. Somit kann bestimmt werden, wie sich das Kraftfahrzeug in dem nachfolgenden Parkzug bewegen wird. Damit kann bestimmt werden, wie der Mindestabstand zu wählen ist, damit die Bewegung nicht durch den Bordstein behindert ist.

In einer weiteren Ausführungsform wird der Mindestabstand in Abhängigkeit von einem jeweiligen Bewegungsbereich bestimmt, in welchem die lenkbaren Räder des Kraftfahrzeugs bewegbar sind. Hierbei können insbesondere die Abmessungen der lenkbaren Räder und der Bereich, in dem die lenkbaren Räder bewegbar sind, bestimmt werden. Wenn das zumindest eine Rad ein lenkbares Rad ist, kann der Mindestabstand in Abhängigkeit von dem Bewegungsbereich dieses Rades bestimmt werden. Insbesondere kann der Mindestabstand so bestimmt werden, dass sich der Bordstein außerhalb des Bewegungsbereiches des lenkbaren Rads befindet. Wenn es sich bei dem Rad um ein feststehendes Rad beziehungsweise ein nicht lenkbares Rad handelt, kann beispielsweise ein anderer Mindestabstand vorgesehen sein, der insbesondere geringer ist als bei einem lenkbaren Rad. So kann je nach Rad der entsprechende Mindestabstand bestimmt werden und somit die Fahrtrajektorie besonders effektiv bestimmt werden.

In einer weiteren Ausgestaltung ist die erkannte Parklücke zum Querparken des Kraftfahrzeugs ausgebildet und die Fahrtrajektorie wird derart bestimmt, dass die Räder des Kraftfahrzeugs, welche einer Hinterachse des Kraftfahrzeugs zugeordnet sind, in einem ersten der zumindest zwei Parkzüge über den Bordstein bewegt werden. Wenn es sich bei der erkannten Parklücke um eine Parklücke zum Querparken beziehungsweise zum Senkrechtparken handelt, kann das Kraftfahrzeug beispielsweise in dem ersten Parkzug rückwärts bewegt werden. Dabei können die Räder, die der Hinterachse zugeordnet sind, über den Bordstein bewegt werden. Dies gilt insbesondere für den Fall, bei dem sich der Bordstein innerhalb der Parklücke befindet. Der Bordstein kann beispielsweise die Fahrbahn von einem erhöht zur Fahrbahn angeordneten Bereich abgrenzen. Dabei können die Räder, die der Hinterachse zugeordnet sind, über den Bordstein auf den erhöhten Bereich bewegt werden. Hierbei kann es insbesondere vorgesehen sein, dass die Räder im Wesentlichen unter einem rechten Winkel über den Bordstein bewegt werden. Damit kann eine Beschädigung der Räder verhindert werden.

Hierbei ist es weiterhin vorteilhaft, wenn die Fahrtrajektorie derart bestimmt wird, dass der Abstand zwischen den Rädern, welche der Hinterachse zugeordnet sind, und dem Bordstein an einem Wechselpunkt zwischen einem zweiten und einem dritten Parkzug den vorbestimmten Mindestabstand überschreitet. Bei dem Querparken kann das Kraftfahrzeug in dem ersten Parkzug so bewegt werden, dass die Räder, die der Hinterachse zugeordnet sind, über den Bordstein bewegt werden. In einem anschließenden zweiten Parkzug kann das Kraftfahrzeug so bewegt werden, dass die Räder, die der Hinterachse zugeordnet sind, den Mindestabstand zu dem Bordstein aufweisen. Dies betrifft einerseits den Fall, in dem das Kraftfahrzeug bei dem zweiten Einparkzug so bewegt wird, dass die Räder, die der Hinterachse zugeordnet sind, auf dem erhöhten Bereich beziehungsweise dem Bordstein bleiben. Damit kann eine unnötige Bordsteinüberfahrt verhindert werden. Für den Fall, dass die Räder der Hinterachse bei dem zweiten Einparkzug wieder von dem erhöhten Bereich beziehungsweise dem Bordstein herab bewegt werden, kann der darauf folgende Wechselpunkt so gewählt werden, dass die Hinterräder den Mindestabstand zu dem Bordstein aufweisen. Damit kann verhindert werden, dass eines der Hinterräder an dem Bordstein bei dem nachfolgenden Richtungswechsel klebt.

In einer weiteren Ausgestaltung ist die erkannte Parklücke zum Längsparken des Kraftfahrzeugs ausgebildet und die Fahrtrajektorie wird derart bestimmt, dass der Abstand zwischen dem zumindest einen Rad und dem Bordstein bei dem Wechselpunkt zwischen einem ersten und einem zweiten Parkzug den vorbestimmten Mindestabstand überschreitet. Dies betrifft einerseits den Fall, bei dem das Kraftfahrzeug in Richtung Bordstein bewegt wird und der Wendepunkt so bestimmt wird, dass dieser noch vor der Bordsteinüberfahrt erreicht wird. Somit kann insbesondere erreicht werden, dass die lenkbaren Räder frei bewegbar sind. Insbesondere kann erreicht werden, dass sich das zumindest eine Rad beziehungsweise der Reifen nicht genau an der Bordsteinkante befindet. Weiterhin betrifft dies den Fall, in dem das Kraftfahrzeug beziehungsweise das zumindest eine Rad über dem Bordstein bewegt wird. Auch hier wird der Einparkzug so bestimmt, dass das zumindest eine Rad an dem Wechselpunkt den Mindestabstand zum Bordstein aufweist. Damit kann ermöglicht werden, dass die Bordsteinüberfahrt nicht zu knapp vor dem Ende des Parkzugs stattfindet. Insbesondere, wenn das Kraftfahrzeug autonom manövriert wird, kann erreicht werden, dass der Wechselpunkt zuverlässig erreicht werden kann. Somit kann beispielsweise verhindert werden, dass bei einer Ungenauigkeit der Odometrie bezüglich der Längsführung das Rad sehr nahe an dem Bordstein ist oder nur zum Teil auf dem Bordstein aufliegt.

In einer weiteren Ausgestaltung wird die Fahrtrajektorie derart bestimmt, dass der Abstand zwischen dem zumindest einen Rad und dem Bordstein beim Manövrieren des Kraftfahrzeugs den Mindestabstand überschreitet. Mit anderen Worten kann der Mindestabstand auch während der Fahrt entlang der jeweiligen Parkzüge berücksichtigt werden. Somit kann garantiert werden, dass die lenkbaren Räder beim Lenken nicht durch den Bordstein behindert werden. Damit kann das Kraftfahrzeug zuverlässig in die Parklücke eingeparkt werden.

Bevorzugt wird zum Manövrieren des Kraftfahrzeugs entlang der Fahrtrajektorie ein Eingriff in einen Antriebsmotor und/oder in eine Bremse des Kraftfahrzeugs durchgeführt. Mit anderen Worten kann das Kraftfahrzeug entlang der Fahrtrajektorie voll-autonom manövriert werden. Dabei kann ein Fahrerassistenzsystem des Kraftfahrzeugs einen Eingriff in die Lenkung des Kraftfahrzeugs übernehmen. Zudem kann das Fahrerassistenzsystem einen Eingriff in einen Antriebsmotor und/oder die Bremse des Kraftfahrzeugs durchführen. Auf diese Weise kann die Geschwindigkeit des Kraftfahrzeugs bei der Fahrt entlang der Fahrtrajektorie geregelt werden. Hierbei kann es auch vorgesehen sein, dass die Geschwindigkeit des Kraftfahrzeugs bei der Bordsteinüberfahrt entsprechend angepasst wird. Insbesondere kann die Geschwindigkeit des Kraftfahrzeugs bei der Bordsteinüberfahrt reduziert werden. Somit kann eine Beschädigung der Räder verhindert werden. Zudem kann der erforderliche Komfort für den Fahrer beim Manövrieren ermöglicht werden.

Ein erfindungsgemäßes Fahrerassistenzsystem für ein Kraftfahrzeug ist zum Durchführen eines erfindungsgemäßen Verfahrens ausgelegt. Bevorzugt umfasst das Fahrerassistenzsystem einen Sensor, insbesondere einen Ultraschallsensor, mit dem Objekte in dem Umgebungsbereich des Kraftfahrzeugs erfasst werden können. Der zumindest eine Sensor kann auch als Kamera, Radarsensor, Lidar-Sensor oder dergleichen ausgebildet sein. Zudem kann das Fahrerassistenzsystem eine entsprechende Steuereinrichtung, beispielsweise ein elektronisches Steuergerät des Kraftfahrzeugs, umfassen. Mit der Steuereinrichtung kann anhand der Sensordaten, die von dem Sensor bereitgestellt werden, die Parklücke erkannt werden. Zudem kann mittels der Steuereinrichtung die Fahrtrajektorie bestimmt werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: das Kraftfahrzeug gemäß Fig. 1, welches in eine Parklücke zum Querparken eingeparkt wird;
- Fig. 3: das Kraftfahrzeug gemäß Fig. 1, welches in eine weitere zum Querparken eingeparkt wird; und
- Fig. 4: das Kraftfahrzeug gemäß Fig. 1, welches in eine Parklücke zum Längsparken eingeparkt wird;

In den Figuren werden gleiche und funktionsgleiche Elemente mit den gleichen Bezugszeichen versehen.

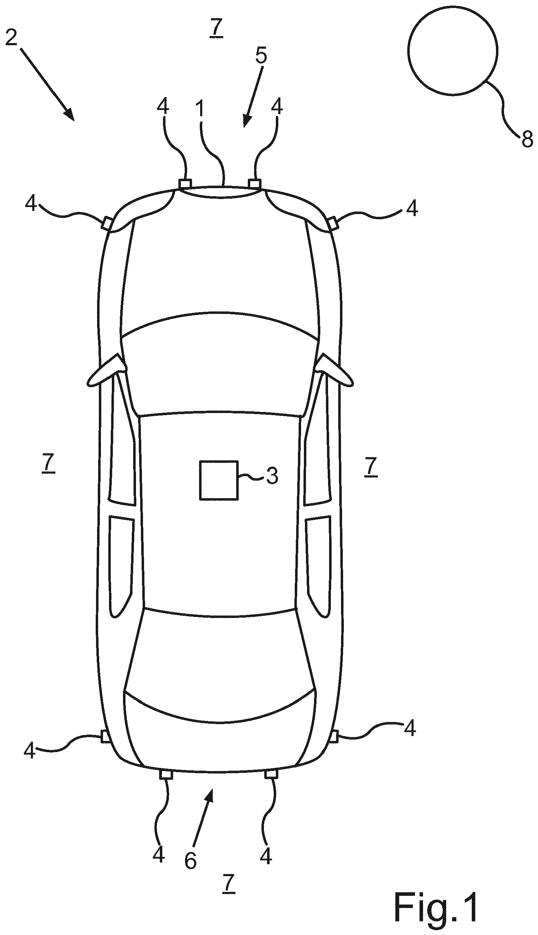

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, welche beispielsweise durch ein elektronisches Steuergerät (ECU - Electronic Control Unit) des Kraftfahrzeugs 1 gebildet sein kann. Darüber hinaus umfasst das Fahrerassistenzsystem 2 zumindest einen Sensor 4.

Vorliegend umfasst das Fahrerassistenzsystem 2 acht Sensoren 4, die jeweils als Ultraschallsensoren ausgebildet sind. Dabei sind vier Sensoren 4 an einem Frontbereich 5 des Kraftfahrzeugs 1 und vier Sensoren 4 an einem Heckbereich 6 des Kraftfahrzeugs 1 angeordnet. Die Sensoren 4 sind dazu ausgebildet, zumindest ein Objekt 8 in einem Umgebungsbereich 7 des Kraftfahrzeugs 1 zu erfassen. Die Sensoren 4 dienen insbesondere dazu, eine relative Lage zwischen dem Objekt 8 und dem Kraftfahrzeug 1 zu bestimmen. Die Sensoren 4 können beispielsweise an entsprechenden Durchgangsöffnungen in den Stoßfängern des Kraftfahrzeugs 1 angeordnet sein. Es kann auch vorgesehen sein, dass die Sensoren 4 verdeckt hinter den Stoßfängern angeordnet sind.

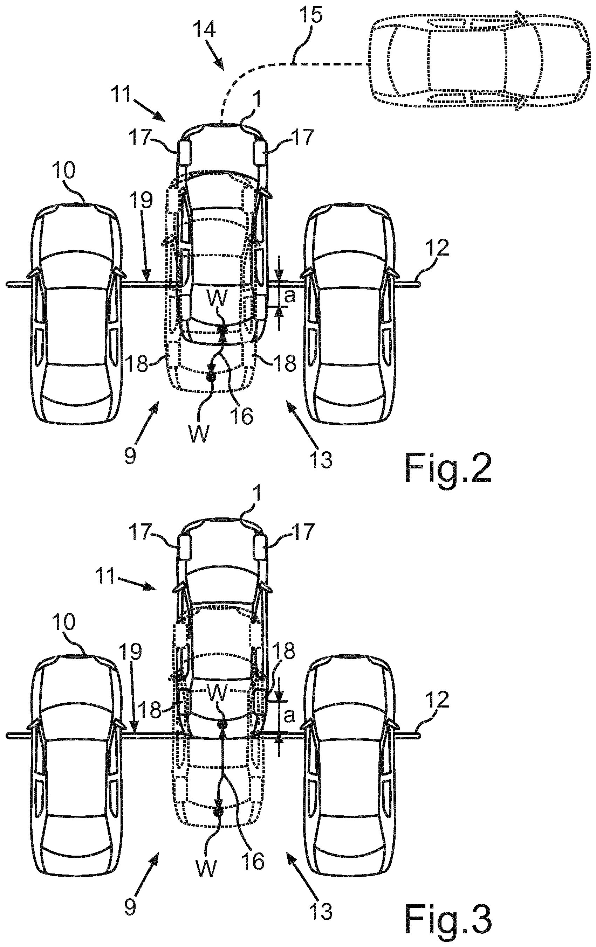

Fig. 2 zeigt das Kraftfahrzeug 1, welches in eine Parklücke 9 eingeparkt wird. Die Parklücke 9 ist zum Querparken des Kraftfahrzeugs 1 ausgebildet. Die Parklücke 9 ist vorliegend durch zwei weitere Fahrzeuge 10 begrenzt. Zum Erkennen der Parklücke 9 kann das Kraftfahrzeug 1 beispielsweise an den Fahrzeugen 10 vorbei bewegt werden. Während der Bewegung des Kraftfahrzeugs 1 kann mit den Sensoren 4 der fortlaufende Umgebungsbereich 7 des Kraftfahrzeugs 1 erfasst werden und hierbei als Objekte 8 die weiteren Fahrzeuge 10 erkannt werden. Hierbei kann der freie Raum zwischen den weiteren Fahrzeugen 10 vermessen werden und somit als Parklücke 9 erkannt werden.

Vorliegend befindet sich innerhalb der Parklücke 9 ein Bordstein 12, über den das Kraftfahrzeug 1 beim Einparken in die Parklücke 9 fährt. Der Bordstein 12 kann beispielsweise eine maximale Höhe von 14 cm aufweisen. Die Parklücke 9 ist somit teilweise einem ersten Bereich zugeordnet, der beispielsweise durch eine Fahrbahn 11 gebildet sein kann. Zudem ist die Parklücke 9 teilweise einem zweiten Bereich 13 zugeordnet, der von der Fahrbahn 11 durch den Bordstein 12 getrennt ist. Beispielsweise kann dieser Bereich 13 erhöht im Vergleich zu der Fahrbahn 11 angeordnet sein.

Anhand der erkannten Parklücke 9 wird eine Fahrtrajektorie 14 bestimmt, entlang welcher das Kraftfahrzeug 1 zum Einparken in die Parklücke 9 manövriert wird. Das Manövrieren des Kraftfahrzeugs 1 kann dabei semi-autonom erfolgen. Dabei übernimmt das Fahrerassistenzsystem 2 einen Eingriff in die Lenkung des Kraftfahrzeugs 1. Dem Fahrer des Kraftfahrzeugs 1 bleibt es weiterhin zugeteilt, das Gaspedal und die Bremse zu betätigen. Es kann auch vorgesehen sein, dass das Kraftfahrzeug 1 voll-autonom in die Parklücke 9 entlang der Fahrtrajektorie 14 eingeparkt wird. In diesem Fall übernimmt das Fahrerassistenzsystem 2 zudem einen Eingriff in einen Antriebsmotor und eine Bremse des Kraftfahrzeugs 1. Die Fahrtrajektorie 14 wird vorliegend derart bestimmt, dass diese mehrere Parkzüge 15, 16 umfasst. Dabei wird das Kraftfahrzeug 1 zunächst entlang eines ersten Parkzugs 15 rückwärts in die Parklücke 9 bewegt. Vorliegend ist zudem ein zweiter Parkzug 16 dargestellt, in dem das Kraftfahrzeug 1 wieder vorwärts bewegt wird. Der Wechsel zwischen dem ersten Parkzug 15 und dem zweiten Parkzug 16 erfolgt an einem Wechselpunkt W. Ein auf den Parkzug 16 folgender dritter Parkzug, bei dem das Kraftfahrzeug 1 wieder rückwärts bewegt wird, ist vorliegend nicht dargestellt.

Bei dem Verfahren zum Manövrieren des Kraftfahrzeugs 1 ist es vorgesehen, dass die Parkzüge 15, 16 beziehungsweise der Wechselpunkt W derart bestimmt werden, dass ein Abstand zumindest eines Rades 17, 18 des Kraftfahrzeugs 1 und dem Bordstein 12 einen vorbestimmten Mindestabstand a überschreitet. Ferner ist es vorgesehen, dass die Parkzüge 15, 16 derart bestimmt werden, dass eine Anzahl von Bordsteinüberfahrten, bei denen zumindest ein Rad 17, 18 des Kraftfahrzeugs 1 über den Bordstein 12 bewegt wird, minimiert wird.

Bei dem Beispiel von Fig. 2 wird das Kraftfahrzeug 1 zunächst rückwärts entlang des ersten Parkzugs 15 bewegt. Dabei werden die Räder 18, die einer Hinterachse des Kraftfahrzeugs 1 zugeordnet sind, über den Bordstein 12 bewegt. In dem nachfolgenden zweiten Parkzug 16 wird das Kraftfahrzeug 1 so bewegt, dass die hinteren Räder 18 auf dem Bordstein 12 beziehungsweise in dem Bereich 13 bleiben. Dabei wird der sich an dem zweiten Parkzug 16 anschließende Wechselpunkt W so gewählt, dass die hinteren Räder 18 des Kraftfahrzeugs 1 den Mindestabstand a zu dem Bordstein 12 aufweisen. Der Mindestabstand a wird vorliegend zwischen einer Bordsteinkante 19 und einem Mittelpunkt des Rades 18 gemessen. Der zweite Parkzug 16 wird also so bestimmt, dass die hinteren Räder 18 in dem zweiten Bereich 13 bleiben und somit nicht über den Bordstein 12 hinab rollen.

Fig. 3 zeigt das Kraftfahrzeug 1 beim Einparken in eine weitere Parklücke 9. Auch hier ist die Parklücke 9 zum Querparken des Kraftfahrzeugs 1 ausgebildet. Vorliegend ist die Bewegung des Kraftfahrzeugs 1 während des zweiten Parkzugs 16 veranschaulicht. Hier wird das Kraftfahrzeug 1 in dem zweiten Parkzug 16 so bewegt, dass die Hinterräder 18 wieder um den Bordstein 12 hinab bewegt werden. Auch hier wird ein Mindestabstand a der Hinterräder 18 zu der Bordsteinkante 19 berücksichtigt. Der Mindestabstand a kann dabei ein anderer Mindestabstand a als der in dem Beispiels von Fig. 2 sein. Dadurch ergibt sich im Vergleich zu üblicherweise gewählten Parkzügen ein längerer zweiter Parkzug 16. Somit kann erreicht werden, dass das Kraftfahrzeug 1 während eines nachfolgenden dritten Parkzugs ohne Kollision der Hinterräder 18 mit dem Bordstein 12 manövriert werden kann. Mit anderen Worten kann verhindert werden, dass die Hinterräder 18 an der Bordsteinkante 19 kleben.

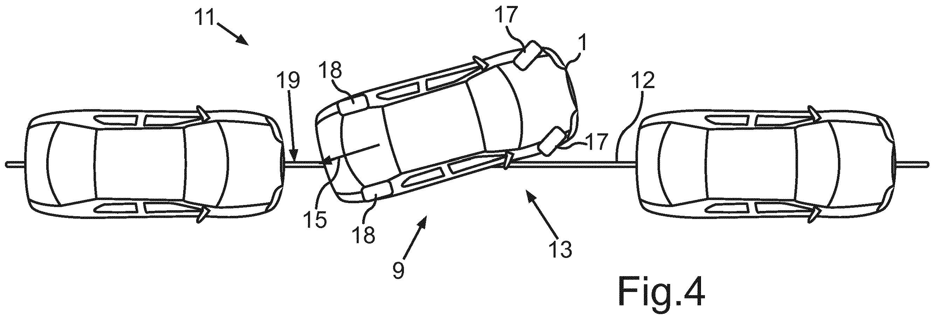

Fig. 4 zeigt das Kraftfahrzeug 1, welches in eine Parklücke 9 eingeparkt wird, wobei die Parklücke 9 zum Längsparken des Kraftfahrzeugs 1 ausgebildet ist. Bei der vorliegenden Einparksituation wird das vordere rechte Rad 17 des Kraftfahrzeugs 1 etwa am Ende des ersten Parkzugs 15 auf den Bordstein 12 hinauf bewegt werden. Dies bringt den Nachteil mit sich, dass die lenkbaren Vorderräder 17 bei einem nachfolgenden zweiten Parkzug 16 nicht entsprechend gelenkt werden können, da diese durch den Bordstein 12 behindert sind. Dies kann im schlimmsten Fall dazu führen, dass der autonome Einparkvorgang abgebrochen wird.

Auch beim Einparken des Kraftfahrzeugs 1 in eine Parklücke, die zum Längsparken des Kraftfahrzeugs 1 ausgebildet ist, können die Parkzüge 15, 16 beziehungsweise die Wechselpunkte W so gewählt werden, dass zumindest ein Rad 17, 18 des Kraftfahrzeugs 1 den Mindestabstand zur Bordsteinkante 19 aufweist. Insbesondere soll vermieden werden, dass eines der Räder 17, 18 genau an der Bordsteinkante 19 anliegt, wenn das Kraftfahrzeug 1 den Wechselpunkt W erreicht. Durch die Vorgabe des Mindestabstands a kann auch erreicht werden, dass beim autonomen Manövrieren des Kraftfahrzeugs 1 der Wechselpunkt W zuverlässig erreicht wird. Auch bei einer Ungenauigkeit beim Manövrieren in Folge eine Odometriefehlers kann somit beispielsweise verhindert werden, dass ein Rad 17, 18 des Kraftfahrzeugs 1 sehr knapp oder nur zum Teil auf dem Bordstein 12 beziehungsweise der Bordsteinkante 19 zum Stehen kommt. Ferner kann durch den Mindestabstand a garantiert werden, dass die lenkbaren Räder 17 beziehungsweise die Vorderräder ausreichend gelenkt werden können.

## Patentansprüche

1. Verfahren zum zumindest semi-autonomen Manövrieren eines Kraftfahrzeugs (1), bei welchem eine Parklücke (9) in einem Umgebungsbereich (7) des Kraftfahrzeugs (1) erkannt wird, wobei die Parklücke (9) von einem Bordstein (12) begrenzt ist oder ein Bordstein (12) innerhalb der Parklücke (9) angeordnet ist, eine Fahrtrajektorie (14) zum Einparken des Kraftfahrzeugs in die Parklücke (9) bestimmt wird und das Kraftfahrzeug (1) entlang der bestimmten Fahrtrajektorie (14) manövriert wird,
wobei
die Fahrtrajektorie (14) derart bestimmt wird, dass diese zumindest zwei Parkzüge (15, 16) aufweist, zwischen welchen eine Fahrtrichtung des Kraftfahrzeugs (1) an einem Wechselpunkt (W) geändert wird, und dass ein Abstand zwischen zumindest einem Rad (17, 18) des Kraftfahrzeugs (1) und dem Bordstein (12) an dem Wechselpunkt (W) einen vorbestimmten Mindestabstand (a) überschreitet,
**dadurch gekennzeichnet, dass**
die zumindest zwei Parkzüge (15, 16) derart bestimmt werden, dass eine Anzahl von Bordsteinüberfahrten, bei denen zumindest ein Rad (17, 18) des Kraftfahrzeugs (1) über den Bordstein (12) bewegt wird, minimiert wird.

2. Verfahren nach Anspruch 1,
**dadurch gekennzeichnet, dass**
das Kraftfahrzeug (1) bei einem der Parkzüge (15, 16) in Richtung des Bordsteins (12) bewegt wird und dieser Parkzug (15, 16) derart bestimmt wird, dass der Abstand zwischen dem zumindest einen Rad (17, 18) und dem Bordstein (12) an dem Wechselpunkt (W) vor einem Erreichen des Bordsteins (12) den Mindestabstand (a) überschreitet.

3. Verfahren nach einem der vorhergehenden Ansprüche,
**dadurch gekennzeichnet, dass**
das Kraftfahrzeug (1) bei einem der Parkzüge (15, 16) zumindest bereichsweise über den Bordstein (12) bewegt wird und dieser Parkzug (15, 16) derart bestimmt wird, dass der Abstand zwischen dem zumindest einen Rad (17, 18) und dem Bordstein (12) an dem Wechselpunkt (W) nach dem Bewegen des Kraftfahrzeugs (1) über den Bordstein (12) den Mindestabstand (a) überschreitet.

4. Verfahren nach einem der vorhergehenden Ansprüche,
**dadurch gekennzeichnet, dass**
der Mindestabstand (a) in Abhängigkeit von einer Typ der erkannten Parklücke (9) und/oder in Abhängigkeit davon bestimmt wird, ob das zumindest eine Rad (17, 18) ein lenkbares Rad (17) ist.

5. Verfahren nach einem der vorhergehenden Ansprüche,
**dadurch gekennzeichnet, dass**
der Mindestabstand (4) in Abhängigkeit von einem jeweiligen Bewegungsbereich bestimmt wird, in welchem die lenkbaren Räder (17) des Kraftfahrzeugs (1) bewegbar sind.

6. Verfahren nach einem der vorhergehenden Ansprüche,
**dadurch gekennzeichnet, dass**
die erkannte Parklücke (9) zum Querparken des Kraftfahrzeugs (1) ausgebildet ist und die Fahrtrajektorie (14) derart bestimmt wird, dass die Räder (18) des Kraftfahrzeugs (1), welche einer Hinterachse des Kraftfahrzeugs (1) zugeordnet sind, in einem ersten Parkzug (15) der zumindest zwei Parkzüge (15, 16) über den Bordstein (12) bewegt werden.

7. Verfahren nach Anspruch 6,
**dadurch gekennzeichnet, dass**
die Fahrtrajektorie (14) derart bestimmt wird, dass der jeweilige Abstand zwischen den Rädern (18), welche der Hinterachse zugeordnet sind, und dem Bordstein (12) an einem Wechselpunkt (W) zwischen einem zweiten Parkzug (16) und einem dritten Parkzug den vorbestimmten Mindestabstand (a) überschreitet.

8. Verfahren nach einem der Ansprüche 1 bis 5,
**dadurch gekennzeichnet**
die erkannte Parklücke (9) zum Längsparken des Kraftfahrzeugs (1) ausgebildet ist und die Fahrtrajektorie (14) derart bestimmt wird, dass der Abstand zwischen dem zumindest einen Rad (17, 18) und dem Bordstein (12) bei dem Wechselpunkt (W) zwischen einem ersten und einem zweiten Parkzug (15, 16) den vorbestimmten Mindestabstand (a) überschreitet.

9. Verfahren nach Anspruch 8,
**dadurch gekennzeichnet, dass**
die Fahrtrajektorie (14) derart bestimmt wird, dass der Abstand zwischen dem zumindest einen Rad (17, 18) und dem Bordstein (12) beim Manövrieren des Kraftfahrzeugs (1) den Mindestabstand (a) überschreitet.

10. Verfahren nach einem der vorhergehenden Ansprüche,
**dadurch gekennzeichnet, dass**
zum Manövrieren des Kraftfahrzeugs (1) entlang der Fahrtrajektorie (14) eine Eingriff in einen Antriebsmotor und/oder in eine Bremse des Kraftfahrzeugs (1) durchgeführt wird.

11. Fahrerassistenzsystem (2) für ein Kraftfahrzeug (1), welches zum Durchführen eines Verfahrens nach einem der vorhergehenden Ansprüche ausgelegt ist.

12. Kraftfahrzeug (1) mit einem Fahrerassistenzsystem (2) nach Anspruch 11.

## Claims

1. Method for at least semi-autonomous manoeuvring of a motor vehicle (1), in which a parking space (9) is detected in a surrounding area (7) of the motor vehicle (1), wherein the parking space (9) is bounded by a curb (12), or a curb (12) is arranged inside the parking space (9), a travel trajectory (14) for parking the motor vehicle in the parking space (9) is determined, and the motor vehicle (1) is manoeuvred along the determined travel trajectory (14),
wherein
the travel trajectory (14) is determined in such a way that it has at least two parking movements (15, 16) between which a direction of travel of the motor vehicle (1) is changed at a change point (W), and in a such a way that a distance between at least one wheel (17, 18) of the motor vehicle (1) and the curb (12) at the change point (W) exceeds a predetermined minimum distance (a),
**characterized in that**
the at least two parking movements (15, 16) are determined in such a way that a number of movements over the curb, during which at least one wheel (17, 18) of the motor vehicle (1) is moved over the curb (12), is minimized.

2. Method according to Claim 1,
**characterized in that**
in one of the parking movements (15, 16) the motor vehicle (1) is moved in the direction of the curb (12), and this parking movement (15, 16) is determined in such a way that the distance between the at least one wheel (17, 18) and the curb (12) at the change point (W) exceeds the minimum distance (a) before the curb (12) is reached.

3. Method according to one of the preceding claims,
**characterized in that**
in one of the parking movements (15, 16) the motor vehicle (1) is moved at least partially over the curb (12), and this parking movement (15, 16) is determined in such a way that the distance between the at least one wheel (17, 18) and the curb (12) at the change point (W) exceeds the minimum distance (a) after the movement of the motor vehicle (1) over the curb (12).

4. Method according to one of the preceding claims,
**characterized in that**
the minimum distance (a) is determined as a function of a type of the detected parking space (9) and/or as a function of whether the at least one wheel (17, 18) is a steerable wheel (17).

5. Method according to one of the preceding claims,
**characterized in that**
the minimum distance (4) is determined as a function of a respective movement range in which the steerable wheels (17) of the motor vehicle (1) can be moved.

6. Method according to one of the preceding claims,
**characterized in that**
the detected parking space (9) is designed for diagonally parking the motor vehicle (1), and the travel trajectory (14) is determined in such a way that the wheels (18) of the motor vehicle (1) which are assigned to a rear axle of the motor vehicle (1) are moved over the curb (12) in a first parking movement (15) of the at least two parking movements (15, 16).

7. Method according to Claim 6,
**characterized in that**
the travel trajectory (14) is determined in such a way that the respective distance between the wheels (18) which are assigned to the rear axle and the curb (12) exceeds the predetermined minimum distance (a) at a change point (W) between a second parking movement (16) and a third parking movement.

8. Method according to one of Claims 1 to 5,
**Characterized in that**
the detected parking space (9) is designed for longitudinally parking the motor vehicle (1), and the travel trajectory (14) is determined in such a way that the distance between the at least one wheel (17, 18) and the curb (12) exceeds the predetermined minimum distance (a) at the change point (W) between a first and a second parking movement (15, 16).

9. Method according to Claim 8,
**characterized in that**
the travel trajectory (14) is determined in such a way that the distance between the at least one wheel (17, 18) and the curb (12) exceeds the minimum distance (a) during the manoeuvring of the motor vehicle (1).

10. Method according to one of the preceding claims,
**characterized in that**
in order to manoeuvre the motor vehicle (1) along the travel trajectory (14) engagement is carried out in a drive engine and/or in a brake of the motor vehicle (1).

11. Driver assistance system (2) for a motor vehicle (1), which is configured to carry out a method according to one of the preceding claims.

12. Motor vehicle (1) having a driver assistance system (2) according to Claim 11.

## Revendications

1. Procédé de manoeuvre au moins semi-autonome d'un véhicule automobile (1), avec lequel un emplacement de stationnement (9) dans une zone environnante (7) du véhicule automobile (1) est reconnu, l'emplacement de stationnement (9) étant délimité par une pierre de bordure (12) ou une pierre de bordure (12) étant disposée à l'intérieur de l'emplacement de stationnement (9), une trajectoire de déplacement (14) destinée à l'entrée en stationnement du véhicule automobile dans l'emplacement de stationnement (9) étant définie et le véhicule automobile (1) étant manoeuvré le long de la trajectoire de déplacement (14) définie,
la trajectoire de déplacement (14) étant définie de telle sorte que celle-ci possède au moins deux parcours de stationnement (15, 16) entre lesquels un sens de déplacement du véhicule automobile (1) est modifié au niveau d'un point de changement (W), et en ce qu'un écart entre au moins une roue (17, 18) du véhicule automobile (1) et la pierre de bordure (12) dépasse un écart minimal (a) prédéfini au niveau du point de changement (W),
**caractérisé en ce que**
les au moins deux parcours de stationnement (15, 16) sont définis de telle sorte qu'un nombre de franchissements de pierre de bordure, lors desquels au moins une roue (17, 18) du véhicule automobile (1) est déplacée au-dessus de la pierre de bordure (12), est réduit au minimum.

2. Procédé selon la revendication 1, **caractérisé en ce qu'**avec l'un des parcours de stationnement (15, 16), le véhicule automobile (1) est déplacé en direction de la pierre de bordure (12) et ce parcours de stationnement (15, 16) est défini de telle sorte que l'écart entre l'au moins une roue (17, 18) et la pierre de bordure (12) au niveau du point de changement (W) dépasse l'écart minimal (a) avant d'atteindre la pierre de bordure (12).

3. Procédé selon l'une des revendications précédentes, **caractérisé en ce qu'**avec l'un des parcours de stationnement (15, 16), le véhicule automobile (1) est déplacé au moins dans certaines zones au-dessus de la pierre de bordure (12) et ce parcours de stationnement (15, 16) est défini de telle sorte que l'écart entre l'au moins une roue (17, 18) et la pierre de bordure (12) au niveau du point de changement (W) dépasse l'écart minimal (a) après le déplacement du véhicule automobile (1) au-dessus de la pierre de bordure (12).

4. Procédé selon l'une des revendications précédentes, **caractérisé en ce que** l'écart minimal (a) est défini en fonction d'un type de l'emplacement de stationnement (9) reconnu et/ou en fonction du fait que l'au moins une roue (17, 18) est une roue orientable (17) ou non.

5. Procédé selon l'une des revendications précédentes, **caractérisé en ce que** l'écart minimal (4) est défini en fonction d'une zone de déplacement respective dans laquelle les roues orientables (17) du véhicule automobile (1) peuvent être déplacées.

6. Procédé selon l'une des revendications précédentes, **caractérisé en ce que** l'emplacement de stationnement (9) reconnu est configuré pour un stationnement transversal du véhicule automobile (1) et la trajectoire de déplacement (14) est définie de telle sorte que les roues (18) du véhicule automobile (1), qui sont associées à un essieu arrière du véhicule automobile (1), sont déplacées au-dessus de la pierre de bordure (12) dans un premier parcours de stationnement (15) des au moins deux parcours de stationnement (15, 16).

7. Procédé selon la revendication 6, **caractérisé en ce que** la trajectoire de déplacement (14) est définie de telle sorte que l'écart respectif entre les roues (18) qui sont associées à l'essieu arrière et la pierre de bordure (12) au niveau d'un point de changement (W) entre un deuxième parcours de stationnement (16) et un troisième parcours de stationnement dépasse l'écart minimal (a) prédéfini.

8. Procédé selon l'une des revendications 1 à 5, **caractérisé en ce que** l'emplacement de stationnement (9) reconnu est configuré pour un stationnement longitudinal du véhicule automobile (1) et la trajectoire de déplacement (14) est définie de telle sorte que l'écart entre l'au moins une roue (17, 18) et la pierre de bordure (12) au niveau du point de changement (W) entre un premier et un deuxième parcours de stationnement (15, 16) dépasse l'écart minimal (a) prédéfini.

9. Procédé selon la revendication 8, **caractérisé en ce que** la trajectoire de déplacement (14) est définie de telle sorte que l'écart entre l'au moins une roue (17, 18) et la pierre de bordure (12) lors de la manoeuvre du véhicule automobile (1) dépasse l'écart minimal (a).

10. Procédé selon l'une des revendications précédentes, **caractérisé en ce qu'**une intervention dans un moteur de propulsion et/ou dans un frein du véhicule automobile (1) est effectuée pour manoeuvrer le véhicule automobile (1) le long de la trajectoire de déplacement (14) .

11. Système d'assistance au conducteur (2) pour un véhicule automobile (1), lequel est conçu pour mettre en oeuvre un procédé selon l'une des revendications précédentes.

12. Véhicule automobile (1) équipé d'un système d'assistance au conducteur (2) selon la revendication 11.
